# EUROPÄISCHE PATENTSCHRIFT

(11) **EP 3 745 837 B1**
(45) Veröffentlichungstag und Bekanntmachung des Hinweises auf die Patenterteilung: **22.02.2023**
(21) Anmeldenummer: 19701957.3
(22) Anmeldetag: 10.01.2019
(51) Int. Cl.: A01B 39/18, A01B 13/04, A01B 13/06

(54) **HACKVORRICHTUNG**
HOEING DEVICE
DISPOSITIF DE SARCLAGE

(30) Priorität: 01.02.2018 AT 500992018
(43) Veröffentlichungstag der Anmeldung: 09.12.2020
(73) Patentinhaber: Romstorfer, Roman, 2215 Raggendorf (AT); Holl, Philipp, 4901 Ottnang am Hausruck (AT); Hutter, Hannes, 3830 Waidhofen an der Thaya (AT)
(72) Erfinder: ERTL, Philipp, 4722 Peuerbach (AT); WAGNER, Patrick, 4722 Peuerbach (AT); OLLMAIER, Klemens, 4742 Pram (AT); ROMSTORFER, Roman, 2215 Raggendorf (AT); HOLL, Philipp, 4901 Ottnang am Hausruck (AT); HUTTER, Hannes, 3830 Waidhofen an der Thaya (AT)
(74) Vertreter: Patentanwaltskanzlei Matschnig & Forsthuber OG
(86) Internationale Anmeldenummer: PCT/AT2019/060009
(87) Internationale Veröffentlichungsnummer: WO 2019/148220

(56) Entgegenhaltungen:
- DE-A1- 1 757 919
- DE-C- 849 618
- FR-A1- 2 359 570
- FR-A1- 2 923 980
- GB-A- 1 082 145
- US-A- 4 905 770
- US-A- 5 103 917
- US-A1- 2009 032 274

## Beschreibung

Die Erfindung betrifft eine justierbare Hackvorrichtung zum Entfernen von auf einem Boden befindlichen Unkraut zwischen Reihen von Nutzpflanzen, welche in einem Reihenabstand zueinander beabstandet auf dem Boden angeordnet sind, wobei die Hackvorrichtung ein Tragegestell aufweist, welches zum Anbau an ein landwirtschaftliches Fahrzeug eingerichtet ist und an welchem zumindest eine Hackeinheit mit einer dem Reihenabstand anpassbaren Bearbeitungsbreite angeordnet ist.

Hackvorrichtungen entfernen üblicherweise das Beikraut bzw. Unkraut aus den Reihen bei Reihenkulturen am Feld, beispielsweise Kürbis, Mais oder Rüben, aber auch Bäume oder Sträucher, wobei die einzelnen Reihen in einem gewissen Abstand - auch Reihenabstand genannt - angeordnet sind.

Ohne einem Hacken bzw. Entfernen des Beikrauts würde die eigentliche Kultur von dem Unkraut bzw. Beikraut überwachsen werden bzw. in seiner Entwicklung sehr stark beeinträchtigt werden, wodurch der Ernteertrag erheblich sinkt.

Die Bearbeitungsbreite an den Hackvorrichtungen bzw. den Hackeinheiten selbst ist dabei fix eingestellt und kann derzeit nur äußerst mühsam und unter erheblichen Zeitverlust händisch verstellt werden.

Deshalb wird eine solche Verstellung der Bearbeitungsbreite an der Hackvorrichtung von Benutzern oft nicht durchgeführt und mit einer gleichbleibend eingestellten Bearbeitungsbreite an der Hackvorrichtung unterschiedliche Reihenkulturen bzw. Feldfrüchte am Boden bearbeitet. Dadurch wird jedoch das Wachstum der Pflanzen während einer Saison nicht berücksichtigt.

Die DE 849 618 C zeigt eine Hackvorrichtung aus dem Stand der Technik.

Es ist eine Aufgabe der Erfindung eine verbesserte Hackvorrichtung bereitzustellen, die eine einfachere Einstellung der Bearbeitungsbreite einer Hackeinheit ermöglicht.

Diese Aufgabe wird gelöst, durch das Kennzeichen des unabhängigen Anspruchs 1.

Die Möglichkeit der Verstellung der Bearbeitungsbreite ermöglicht dem Benutzer deutlich näher an den Reihen der Feldfrüchte zu hacken und verringert somit den Unkrautbewuchs direkt neben den Pflanzen. Ferner kann die Bearbeitungsbreite für jede Pflanzenkultur individuell angepasst bzw. eingestellt werden, wobei auch ein mehrmaliges Verstellen der Bearbeitungsbreite während des laufenden Betriebs der Hackvorrichtung möglich sein kann.

Ein üblicher Reihenabstand kann zwischen 12,5cm bis 75cm liegen oder darüber hinaus.

Ferner besteht dadurch die Möglichkeit, von Feld zu Feld zwischen verschiedenen Wachstumsstufen bzw. Wachstumsphasen oder zwischen verschiedenen Feldfrüchten während der Bearbeitung des Bodens die Bearbeitungsbreite entsprechend zu verstellen.

Es sei angemerkt, dass die Scharen derart an den Querstreben gelagert sind, dass bei einem Drehen der Querstreben bzw. einem Verstellen der Bearbeitungsbreite der zumindest einen Hackeinheit mittels der Stelleinrichtung die Ausrichtung der Scharen in Bezug auf die Längsrichtung des Basisstegs beibehalten bzw. nicht verändert wird.

Es sei weiters angemerkt, dass die Position der Scharen und die zugehörige Kinematik derart gewählt ist, dass unabhängig von der eingestellten Bearbeitungsbreite der Hackeinheit die Scharen in keiner gemeinsamen Ebene, senkrecht sowie parallel zur Längsrichtung des Basisstegs liegen um einen bestmöglichen Erdfluss zu gewährleisten und einen Stau von Ernte- wie Hackrückständen zu verhindern.

Als Scharen können beispielsweise Schneidscharen und/oder sogenannte Fingerhacken verwendet werden.

Es kann vorgesehen sein, dass alle Querstreben parallel zueinander angeordnet sind.

Es kann weiters vorgesehen sein, dass die Querstreben eine unterschiedliche Länge aufweisen können.

Es kann beispielsweise vorgesehen sein, dass die zumindest eine Hackeinheit drei Querstreben umfasst, welche parallel zueinander angeordnet sind, wobei eine Querstrebe eine von den anderen unterschiedliche Länge aufweist.

Es kann vorgesehen sein, dass die Antriebseinheit der Stelleinrichtung als linear verschiebbarer Stellarm ausgebildet ist.

Es kann vorgesehen sein, dass die zumindest eine Stelleinrichtung zum Drehen der Querstreben an zumindest zwei Querstreben angreift.

Vorteilhafterweise kann auch vorgesehen sein, dass die Stelleinrichtung zum Drehen der Querstreben an zumindest einer Querstrebe und dem Basissteg angreift.

Es kann auch vorgesehen sein, dass die Stelleinrichtung ferner zumindest eine Übertragungsstrebe umfasst, welche zumindest eine Übertragungsstrebe mit zumindest einer Querstrebe und dem Stellarm mechanisch verbunden ist, um bei einer linearen Verschiebung des Stellarms die Querstreben zu drehen.

Vorteilhafterweise kann die zumindest eine Hackeinheit zumindest ein Stützrad umfassen, welches Stützrad eingerichtet ist, die zumindest eine Hackeinheit in einem montierten Zustand der Hackvorrichtung an einem Fahrzeug entlang des Bodens zu führen, wobei der Abstand der zumindest einen Hackeinheit zum Boden mittels einer Höhenverstelleinrichtung einstellbar ist.

Es kann vorgesehen sein, dass an zumindest einem äußeren Ende zumindest einer Querstrebe zumindest ein Pflanzenschutzelement angeordnet ist, wobei vorzugsweise das zumindest eine Pflanzenschutzelement in seiner Längsrichtung parallel zum Basissteg angeordnet ist.

Es kann günstig sein, wenn an den äußeren Enden zumindest einer Querstrebe zumindest ein Pflanzenschutzelement angeordnet ist, wobei vorzugsweise die Pflanzenschutzelemente in deren Längsrichtung parallel zum Basissteg angeordnet sind.

In einer zweckmäßigen Ausführungsform kann das Tragegestell im Wesentlichen eine längliche Erstreckung aufweisen.

Mit Vorteil kann vorgesehen sein, dass das Tragegestell einen Hauptabschnitt und zumindest zwei an den Hauptabschnitt seitlich anschließende Seitenabschnitte aufweist, die jeweils gelenkig mit dem Hauptabschnitt verbunden sind, um zwischen einem ausgeklappten und einem eingeklappten Zustand zu wechseln, wobei je Seitenabschnitt zumindest eine Hackeinheit angeordnet ist.

Hierbei kann vorgesehen sein, dass die Seitenabschnitte in einem ausgeklappten Zustand in einer Achse mit dem Hauptabschnitt des Tragegestells liegen und in einem zusammengeklappten Zustand, ausgehend von einem an dem Fahrzeug angebauten Zustand der Hackvorrichtung, über dem Hauptabschnitt zusammengeklappt sind.

In einer praxisgerechten Ausführungsform kann die zumindest eine Stelleinrichtung als Linearmotor oder als elektrischer, hydraulischer, pneumatischer oder anders betriebener Hubzylinder ausgebildet sein.

Es kann vorgesehen sein, dass die zumindest eine Stelleinrichtung als Drehmotor im Gelenk ausgebildet ist.

In einer weiteren Ausführungsform kann auch vorgesehen sein, dass die Stelleinrichtung händisch verstellbar ist, wobei beispielsweise der Stellarm mittels einer Bolzensicherung oder Klemmvorrichtung in seiner Position fixierbar ist.

Es kann vorgesehen sein, dass das zumindest eine Pflanzenschutzelement als Schutzscheibe, welches kugelgelagert an den entsprechenden Querstreben angeordnet ist, und/oder als Pflanzenschutzblech ausgebildet ist, welches im Betrieb der Hackvorrichtung teilweise im Boden geführt wird.

Es kann ferner vorgesehen sein, dass die Ausrichtung der Pflanzenschutzelemente in Bezug auf die Längsrichtung des Basisstegs bei einem Drehen der Querstreben bzw. einem Verstellen der Bearbeitungsbreite der zumindest einen Hackeinheit beibehalten bzw. nicht verändert wird.

Erfindungsgemäß ist vorgesehen, dass die Hackvorrichtung zumindest zwei Hackeinheiten umfasst.

Erfindungsgemäß ist vorgesehen, dass die Stelleinrichtungen der Hackeinheiten unabhängig voneinander mittels einem Steuergerät ansteuerbar sind, sodass die Hackeinheiten eine unterschiedliche Bearbeitungsbreite aufweisen können.

Vorteilhafterweise kann zur Steuerung der Stelleinrichtung ein Steuergerät vorgesehen sein, welches Steuergerät in dem Fahrzeug, an welchem die Hackvorrichtung angebaut ist, angeordnet ist.

Erfindungsgemäße ist vorgesehen, dass die Stelleinrichtungen der Hackeinheiten zumindest eine Positionsrückmeldeeinheit, beispielsweise ein Potentiometer, umfassen, wobei die Bearbeitungsbreite der jeweiligen Hackeinheit mittels der Positionsrückmeldeeinheit erfassbar ist, welche ein entsprechendes Signal an das Steuergerät übermittelt, um die jeweils eingestellte Bearbeitungsbreite einer Hackeinheit zu überwachen, nachzuregeln und/oder für einen Benutzer sichtbar anzuzeigen.

Hierfür umfasst die Positionsrückmeldeeinheit eine Kamera, welche die einzustellende Bearbeitungsbreite optisch erfasst und ein entsprechendes Signal an das Steuergerät übermittelt.

Nachfolgend wird die Erfindung anhand von beispielhaften Zeichnungen näher erläutert. Hierbei zeigt
Fig. 1 eine beispielhafte Hackvorrichtung mit sieben an einem Tragerahmen angeordneten Hackeinheiten, wobei die Hackvorrichtung auf einem Boden geführt wird, auf welchem mehrere Reihen von in Reihen angeordneten Nutzpflanzen, welche in einem Reihenabstand zueinander angeordnet sind,
Fig. 2 eine beispielhafte Hackeinheit der Hackvorrichtung aus Fig. 1 in einer perspektivischen Ansicht, wobei die Hackeinheit einen Basissteg mit drehbaren Querstreben aufweist,
Fig. 2a eine Ansicht der Hackeinheit aus Fig. 2 von oben mit einer maximal möglichen einstellbaren Bearbeitungsbreite,
Fig. 2b die Hackeinheit aus Fig. 2 in einem Aufriss,
Fig. 3a eine Ansicht der Hackeinheit aus Fig. 1 von oben mit einer geringstmöglichen einstellbaren Bearbeitungsbreite,
Fig. 3b die Hackeinheit aus Fig. 3a in einem Aufriss,
Fig. 4 eine skizzenhafte Darstellung der möglichen Drehbewegung der Querstreben,
Fig. 5 die beispielhafte Hackvorrichtung aus Fig. 1, wobei die Bearbeitungsbreite der auf dem Boden befindlichen Reihenkulturen kleiner ist und die eingestellte Bearbeitungsbreite an den Hackeinheiten entsprechend angepasst ist,
Fig. 6 die beispielhafte Hackvorrichtung aus Fig. 1 in einem Aufriss,
Fig. 7 die beispielhafte Hackvorrichtung aus Fig. 5 in einem Aufriss, und
Fig. 8a, 8b, 8c, 8d weitere mögliche Ausführungsbeispiele einer Hackeinheit.

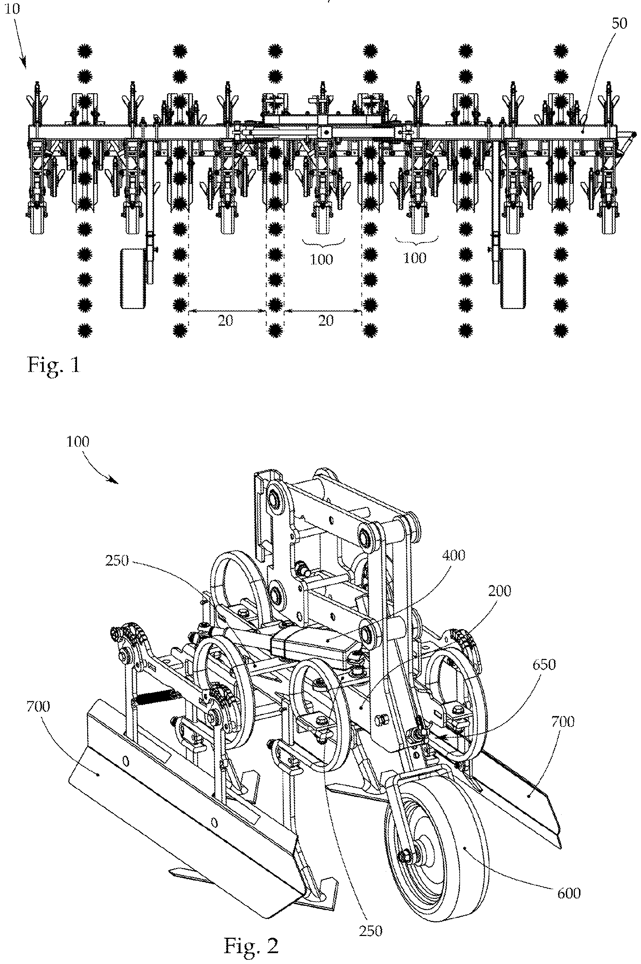

**Fig. 1** zeigt eine beispielhafte justierbare Hackvorrichtung **10** zum Entfernen von auf einem Boden befindlichen Unkraut zwischen Reihen von in Reihen angeordneten Nutzpflanzen, welche in einem Reihenabstand **20** zueinander beabstandet auf dem Boden angeordnet sind, wobei die Hackvorrichtung **10** ein im Wesentlichen eine längliche Erstreckung aufweisendes Tragegestell **50** umfasst, welches zum Anbau an ein landwirtschaftliches Fahrzeug eingerichtet ist und an welchem in diesem Ausführungsbeispiel sieben Hackeinheiten **100** mit einer einstellbaren Bearbeitungsbreite, welche in dieser Figur dem Reihenabstand 20 entspricht, angeordnet sind.

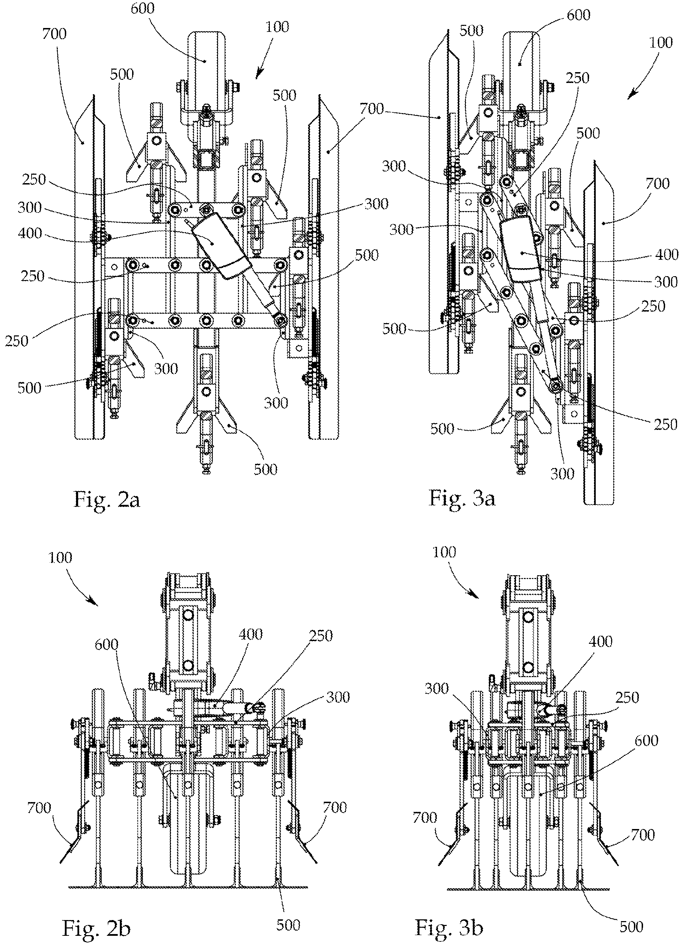

In **Fig. 2** ist eine beispielhafte Hackeinheit **100** in einer perspektivischen Ansicht dargestellt, wobei die Hackeinheit **100** einen geradlinig verlaufenden Basissteg **200** und drei parallel zueinander angeordnete Querstreben **250** aufweist, welche Querstreben **250** jeweils drehbar um eine Drehachse an dem Basissteg **200** gelagert sind, wobei die Drehachsen entlang der Längserstreckung des Basissteges **200** parallel und in einer Ebene angeordnet sind, was beispielsweise deutlicher in **Fig. 2a** zu sehen ist, welche eine Schnittdarstellung in Draufsicht der Hackeinheit **100** aus **Fig. 2** darstellt.

Ferner sind zwei parallel zu dem Basissteg **200** verlaufende Verbindungsstege **300** vorgesehen, welche die drei Querstreben **250,** wovon eine Querstrebe im Vergleich zu den übrigen eine kürzere Länge aufweist, miteinander mechanisch verbinden, sodass Drehbewegungen der Querstreben **250** aneinander gekoppelt sind.

Ferner umfasst die Hackeinheit **100** in den Figuren ein Stützrad **600,** welches Stützrad **600** eingerichtet ist, die zumindest eine Hackeinheit **100** in einem montierten Zustand der Hackvorrichtung **10** an einem Fahrzeug entlang des Bodens zu führen, wobei der Abstand der zumindest einen Hackeinheit **100** zum Boden mittels einer Höhenverstelleinrichtung **650** einstellbar ist.

Weiters umfasst die Hackeinheit **100** in dem in den Figuren gezeigten Beispielen fünf Schneidscharen **500** zum Entfernen des auf dem Boden befindlichen Unkrauts, wobei die Schneidscharen **500** jeweils in einem Normalabstand zum Basissteg **200** an den drei Querstreben in einer festlegbaren Ausrichtung angeordnet sind.

**Fig. 2b** zeigt hierzu einen Aufriss bzw. eine Ansicht von hinten - gesehen in Fahrtrichtung im Betriebszustand der Hackvorrichtung - der beispielhaften Hackeinheit aus **Fig. 2a****,** wobei die fünf Schneidscharen **500** eindeutig zu erkennen sind.

Der Begriff "Fahrtrichtung" bezeichnet in diesem Kontext die Richtung, in der sich ein angetriebenes Fahrzeug wie konstruktiv vorgesehen bewegt. Ein technisch mögliches Rückwärtsfahren wird in diesem Zusammenhang nicht als Fahrtrichtung definiert.

Weiters wird bei einem Drehen der Querstreben **250,** also einer Veränderung der Bearbeitungsbreite der jeweiligen Hackeinheit **100,** die Ausrichtung der Schneidscharen **500** in Bezug auf die Längsrichtung des Basisstegs **200** beibehalten bzw. nicht verändert, wie in **Fig. 2a** bzw. in **Fig. 3a** zu sehen ist.

An den äußeren Enden der gleich langen Querstreben **250** ist jeweils ein Pflanzenschutzelement **700** angeordnet, welches in seiner Längsrichtung parallel zum Basissteg **200** angeordnet ist und in den Figuren gezeigten Beispielen als Pflanzenschutzblech ausgebildet ist, wobei das Pflanzenschutzblech **700** im Betrieb der Hackvorrichtung teilweise im Boden geführt werden kann.

Ferner wird die Ausrichtung der Pflanzenschutzelemente **700** in Bezug auf die Längsrichtung des Basisstegs **200** bei einem Drehen der Querstreben **250** bzw. einem Verstellen der Bearbeitungsbreite der Hackeinheit **100** beibehalten bzw. nicht verändert.

Es kann auch vorgesehen sein, dass eine Hackeinheit **100** nur ein Pflanzenschutzelement umfasst, wobei solche Hackeinheiten vorzugsweise an den äußeren Enden des Tragegestells **50,** wie beispielsweise in **Fig. 1** zu sehen ist, angeordnet sind.

Ferner umfasst die Hackeinheit **100** eine Stelleinrichtung **400,** welche an zumindest zwei Querstreben **250** zum Drehen derselben mittels eines linear verschiebbaren Stellarms angreift, wobei ein Drehen der Querstreben **250** den Normalabstand der jeweiligen Schneidscharen **500** zum Basissteg **200** verändert, und wobei der Normalabstand der jeweiligen Schneidscharen **500** kontinuierlich zwischen einem größten und einem kleinsten Normalabstand verstellbar ist.

Die Stelleinrichtung **400** greift in den Beispielen aus **Fig. 1, 2****,** **2a, 2b, 3a, 3b** an einem Ende einer Querstrebe **250** und dem Basissteg **200** an, um die Querstreben **250** mittels dem linear verschiebbaren Stellarms zu verdrehen.

Die Stelleinrichtung **400** ist beispielsweise als elektrischer Hubzylinder ausgebildet, kann jedoch auch als Linearmotor ausgeführt sein, wobei zur Ansteuerung der Stelleinrichtung **400** ein Steuergerät vorgesehen sein kann, welches vorzugsweise in dem Fahrzeug, an welchem die Hackvorrichtung **10** angebaut ist, angeordnet ist.

Ferner kann die Stelleinrichtung **400** auch hydraulisch oder pneumatisch angetrieben werden.

In einer weiteren Ausführungsform kann auch vorgesehen sein, dass die Stelleinrichtung 400 händisch verstellbar ist, wobei beispielsweise der Stellarm mittels einer Bolzensicherung oder einer Klemmvorrichtung in seiner Position fixierbar ist.

**Fig. 2a** und **Fig. 2b** zeigen den größten Normalabstand der Schneidscharen **500** zum Basissteg **200** bzw. die größte einstellbare Bearbeitungsbreite der Hackeinheit **100,** wobei der größte Normalabstand durch orthogonal zum Basissteg **200** stehende Querstreben **250** erzielt wird, wie in den Figuren zu sehen ist.

**Fig. 3a** und **Fig. 3b** zeigen den kleinsten einstellbaren Normalabstand der Schneidscharen **500** zum Basissteg **200** bzw. die kleinstmögliche Bearbeitungsbreite der Hackeinheit **100.**

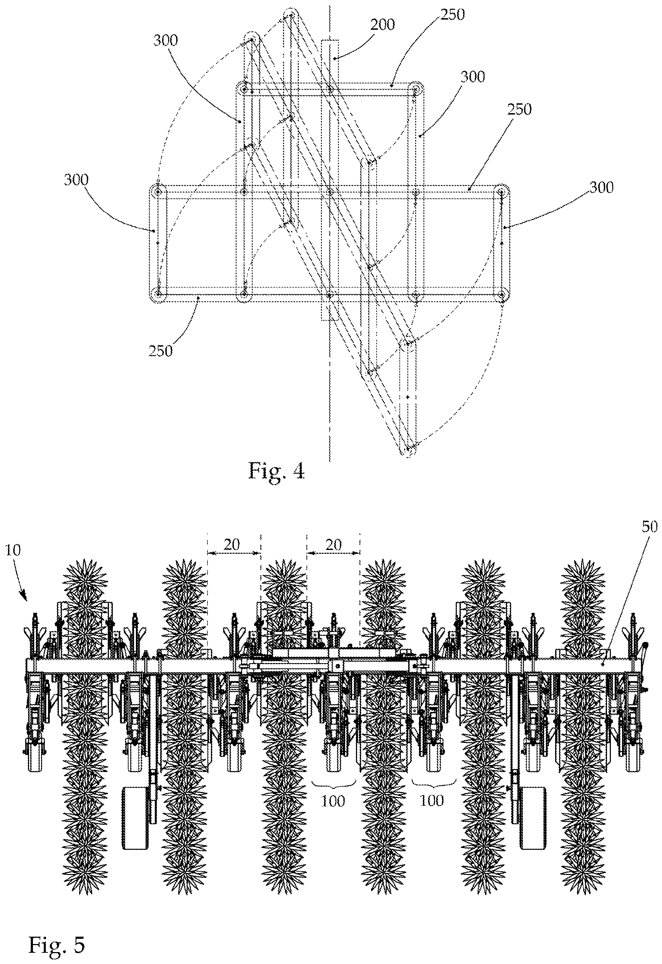

In **Fig. 4** ist eine schematische Zeichnung der mechanischen Kopplung der Querstreben **250** mit dem Basissteg **200** aus den vorherigen Figuren gezeigt.

**Fig. 5** zeigt die beispielhafte Hackvorrichtung **10** aus **Fig. 1****,** wobei der Reihenabstand **20** zwischen den gezeigten Reihen der Feldfrüchte kleiner ist und dementsprechend die Bearbeitungsbreite der Hackeinheiten **100** durch die jeweilige Stelleinrichtung **400** angepasst ist.

Es ist jedoch auch möglich, dass die Stelleinrichtungen **400** der Hackeinheiten **100** unabhängig voneinander ansteuerbar sind, sodass die Hackeinheiten **100** unterschiedliche Bearbeitungsbreiten aufweisen können.

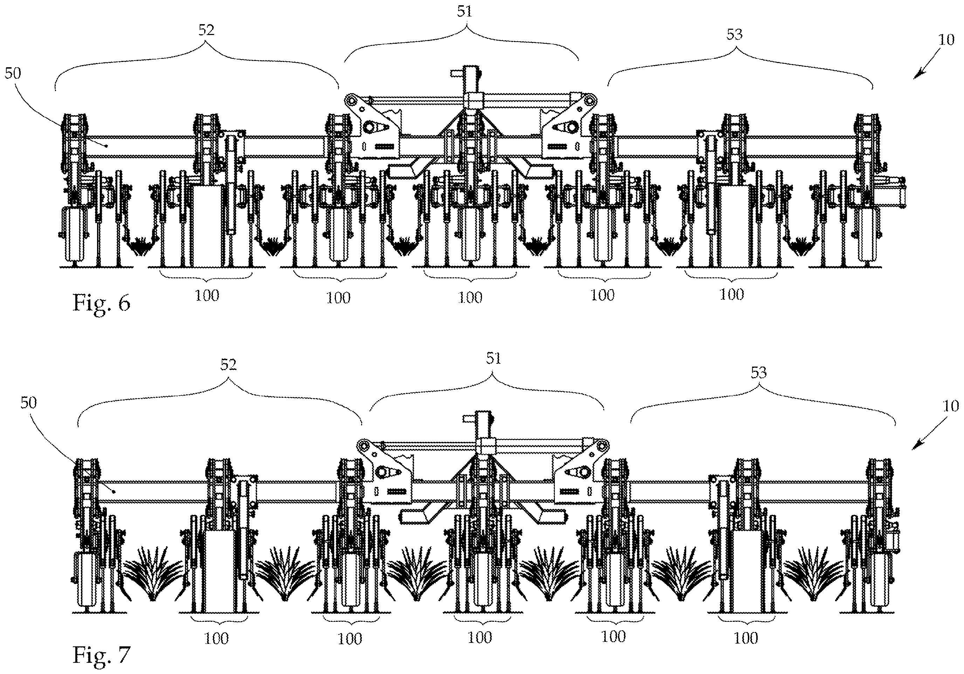

**Fig. 6** und **7** zeigen jeweils einen Aufriss einer beispielhaften Hackvorrichtung **100** mit unterschiedlichen Bearbeitungsbreiten, wobei das Tragegestell **50** einen Hauptabschnitt **51** und zwei an den Hauptabschnitt **51** seitlich anschließende Seitenabschnitte **52, 53** aufweist, die jeweils gelenkig mit dem Hauptabschnitt **51** verbunden sind, um zwischen einem ausgeklappten und einem eingeklappten Zustand zu wechseln, wobei je Seitenabschnitt **52, 53** drei Hackeinheiten **100** und am Hauptabschnitt **51** eine Hackeinheit **100** angeordnet ist.

Die oben genannte Anzahl der Hackeinheiten **100** je Abschnitt **51, 52, 53** dient jedoch nur als Beispiel und kann im Prinzip frei gewählt werden.

Ferner sind die Seitenabschnitte **52, 53** in einem ausgeklappten Zustand in einer Achse mit dem Hauptabschnitt **51** des Tragegestells **50** und in einem zusammengeklappten Zustand, ausgehend von einem an dem Fahrzeug angebauten Zustand der Hackvorrichtung **10,** über dem Hauptabschnitt **51** zusammengeklappt.

Es kann auch vorgesehen sein, dass bei größeren Breiten die Seitenabschnitte **52, 53** - ausgehend von einem an dem Fahrzeug angebauten Zustand der Hackvorrichtung **10** - nach hinten geklappt werden.

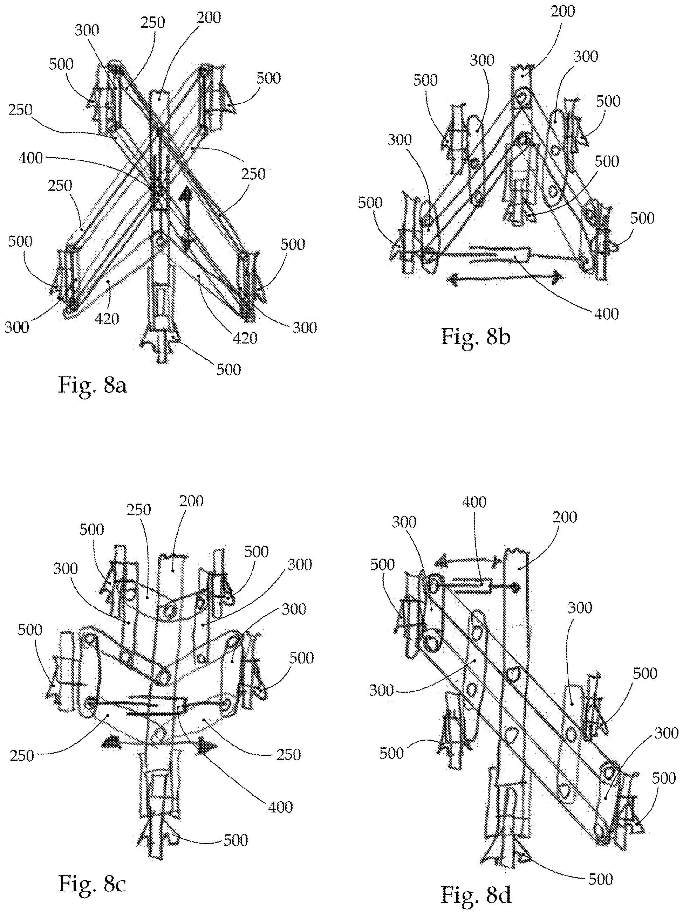

**Fig. 8a** zeigt ein weiteres mögliches Ausführungsbeispiel einer Hackeinheit **100,** wobei die Stelleinrichtung **400** ferner zwei Übertragungsstreben **420** umfasst, welche jeweils mit einer Querstrebe **250** und dem Stellarm mechanisch verbunden sind, um bei einer linearen Verschiebung des Stellarms die Querstreben zu drehen.

**Fig. 8b** und **8c** zeigen ein weiteres Beispiel einer Hackeinheit **100,** wobei die Stelleinrichtung **400** zum Drehen der Querstreben **250** an zwei Querstreben **250** angreift.

**Fig. 8d** zeigt ein weiteres Beispiel einer Hackeinheit **100,** wobei die Stelleinrichtung zum Drehen der Querstreben **250** an einer Querstrebe und dem Basissteg **200** angreift.

Es sei angemerkt, dass die in den Figuren gezeigten Beispiele keine abschließenden Ausführungsbeispiele zeigen.

**BEZUGSZEICHENLISTE**

| | |
|---|---|
| Hackvorrichtung | 10 |
| Reihenabstand | 20 |
| Tragegestell | 50 |
| Hauptabschnitt | 51 |
| Seitenabschnitte | 52, 53 |
| Hackeinheit | 100 |
| Basissteg | 200 |
| Querstreben | 250 |
| Verbindungssteg | 300 |
| Stelleinrichtung | 400 |
| Übertragungsstrebe | 420 |
| Schare | 500 |
| Stützrad | 600 |
| Höhenverstelleinrichtung | 650 |
| Pflanzenschutzelement | 700 |

## Patentansprüche

1. Justierbare Hackvorrichtung (10) zum Entfernen von auf einem Boden befindlichen Unkraut zwischen Reihen von Nutzpflanzen, welche in einem Reihenabstand (20) zueinander beabstandet auf dem Boden angeordnet sind, wobei die Hackvorrichtung (10) ein Tragegestell (50) aufweist, welches zum Anbau an ein landwirtschaftliches Fahrzeug eingerichtet ist und an welchem zumindest eine Hackeinheit (100) mit einer dem Reihenabstand (20) anpassbaren Bearbeitungsbreite angeordnet ist, wobei die Hackeinheit (100) Folgendes umfasst:
- zumindest einen geradlinig verlaufenden Basissteg (200) und zumindest zwei Querstreben (250), welche Querstreben (250) jeweils drehbar um eine Drehachse an dem zumindest einen Basissteg (200) gelagert sind, wobei die Drehachsen entlang der Längserstreckung des Basissteges (200) parallel und in einer Ebene angeordnet sind, und wobei jeweils zumindest zwei Querstreben (250) parallel zueinander angeordnet sind,
- zumindest einen parallel zu dem zumindest einen Basissteg (200) verlaufenden Verbindungssteg (300), welcher die zumindest zwei Querstreben (250) miteinander mechanisch verbindet, sodass Drehbewegungen der Querstreben (250) aneinander gekoppelt sind,
- zumindest zwei Scharen (500) zum Entfernen des auf dem Boden befindlichen Unkrauts, welche Scharen (500) in einem Normalabstand zum Basissteg (200) an den zumindest zwei Querstreben (250) in einer festlegbaren Ausrichtung zum Basissteg (200) angeordnet sind, wobei die Ausrichtung der Scharen (500) bei einem Drehen der entsprechend Querstreben (250) unverändert bleibt, und
- zumindest eine Stelleinrichtung (400) mit einer Antriebseinheit zum Verdrehen zumindest einer Querstrebe, wobei ein Drehen der Querstreben (250) den Normalabstand der Scharen (500) zum Basissteg (200) verändert, und wobei der Normalabstand der jeweiligen Scharen (500) kontinuierlich zwischen einem größten und einem kleinsten Normalabstand verstellbar ist,
**dadurch gekennzeichnet, dass**
die Hackvorrichtung (10) zumindest zwei Hackeinheiten (100) umfasst, wobei
die Stelleinrichtungen (400) der Hackeinheiten (100) unabhängig voneinander mittels einem Steuergerät ansteuerbar sind, sodass die Hackeinheiten (100) unterschiedliche Bearbeitungsbreiten aufweisen können, wobei
die Stelleinrichtungen (400) der Hackeinheiten (100) zumindest eine Positionsrückmeldeeinheit, beispielsweise ein Potentiometer, umfassen, wobei die Bearbeitungsbreite der jeweiligen Hackeinheit (100) mittels der Positionsrückmeldeeinheit erfassbar ist, welche ein entsprechendes Signal an das Steuergerät übermittelt, um die jeweils eingestellte Bearbeitungsbreite einer Hackeinheit (100) zu überwachen, durch das Steuergerät nachzuregeln und/oder für einen Benutzer sichtbar anzuzeigen, und wobei
die Positionsrückmeldeeinheit eine Kamera umfasst, welche die einzustellende Bearbeitungsbreite optisch erfasst und ein entsprechendes Signal an das Steuergerät übermittelt.

2. Vorrichtung nach Anspruch 1, **dadurch gekennzeichnet, dass** die Antriebseinheit der Stelleinrichtung (400) als linear verschiebbarer Stellarm ausgebildet ist.

3. Vorrichtung nach Anspruch 1 oder 2, **dadurch gekennzeichnet, dass** die zumindest eine Stelleinrichtung (400) zum Drehen der Querstreben (250) an zumindest zwei Querstreben (250) angreift.

4. Vorrichtung nach Anspruch 1 oder 2, **dadurch gekennzeichnet, dass** die Stelleinrichtung (400) zum Drehen der Querstreben (250) an zumindest einer Querstrebe (250) und dem Basissteg (200) angreift.

5. Vorrichtung nach Anspruch 2, **dadurch gekennzeichnet, dass** die Stelleinrichtung (400) ferner zumindest eine Übertragungsstrebe (420) umfasst, welche zumindest eine Übertragungsstrebe (420) mit zumindest einer Querstrebe (250) und dem Stellarm mechanisch verbunden ist, um bei einer linearen Verschiebung des Stellarms die Querstreben (250) zu drehen.

6. Vorrichtung nach einem der Ansprüche 1 bis 5, **dadurch gekennzeichnet, dass** die zumindest eine Hackeinheit (100) zumindest ein Stützrad (600) umfasst, welches Stützrad (600) eingerichtet ist, die zumindest eine Hackeinheit (100) in einem montierten Zustand der Hackvorrichtung (10) an einem Fahrzeug entlang des Bodens zu führen, wobei der Abstand der zumindest einen Hackeinheit (100) zum Boden mittels einer Höhenverstelleinrichtung (650) einstellbar ist.

7. Vorrichtung nach einem der Ansprüche 1 bis 6, **dadurch gekennzeichnet, dass** an zumindest einem äußeren Ende zumindest einer Querstrebe (250) zumindest ein Pflanzenschutzelement (700) angeordnet ist, wobei vorzugsweise das zumindest eine Pflanzenschutzelement (700) in seiner Längsrichtung parallel zum Basissteg (200) angeordnet ist.

8. Vorrichtung nach einem der Ansprüche 1 bis 7, **dadurch gekennzeichnet, dass** an den äußeren Enden zumindest einer Querstrebe zumindest ein Pflanzenschutzelement (700) angeordnet ist, wobei vorzugsweise die Pflanzenschutzelemente (700) in deren Längsrichtung parallel zum Basissteg (200) angeordnet sind.

9. Vorrichtung nach einem der Ansprüche 1 bis 8, **dadurch gekennzeichnet, dass** das Tragegestell (50) einen Hauptabschnitt (51) und zumindest zwei an den Hauptabschnitt (51) seitlich anschließende Seitenabschnitte (52, 53) aufweist, die jeweils gelenkig mit dem Hauptabschnitt (51) verbunden sind, um zwischen einem ausgeklappten und einem eingeklappten Zustand zu wechseln, wobei je Seitenabschnitt (52, 53) zumindest eine Hackeinheit (100) angeordnet ist.

10. Vorrichtung nach Anspruch 9, **dadurch gekennzeichnet, dass** die Seitenabschnitte (52, 53) in einem ausgeklappten Zustand in einer Achse mit dem Hauptabschnitt (51) des Tragegestells (50) liegen und in einem zusammengeklappten Zustand, ausgehend von einem an dem Fahrzeug angebauten Zustand der Hackvorrichtung (10), über dem Hauptabschnitt (51) zusammengeklappt sind.

11. Vorrichtung nach einem der Ansprüche 1 bis 10, **dadurch gekennzeichnet, dass** die zumindest eine Stelleinrichtung (400) als Linearmotor oder als elektrischer, hydraulischer oder pneumatischer Hubzylinder ausgebildet ist.

12. Vorrichtung nach einem der Ansprüche 1 bis 11, **dadurch gekennzeichnet, dass** zur Steuerung der Stelleinrichtung (400) ein Steuergerät vorgesehen ist, welches Steuergerät in dem Fahrzeug, an welchem die Hackvorrichtung (10) angebaut ist, angeordnet ist.

## Claims

1. Adjustable hoeing device (10) for removing weeds located on a ground between rows of crops which are arranged on the ground spaced apart from one another at a row spacing (20), the hoeing device (10) having a supporting frame (50) which is arranged for attachment to an agricultural vehicle and on which at least one hoeing unit (100) is arranged with a working width which can be adapted to the row spacing (20), the hoeing unit (100) comprising:
- at least one rectilinearly extending base web (200) and at least two transverse struts (250), which transverse struts (250) are each mounted rotatably about an axis of rotation on the at least one base web (200), wherein the axes of rotation are arranged parallel and in one plane along the longitudinal extent of the base web (200), and wherein at least two transverse struts (250) are each arranged parallel to one another,
- at least one connecting web (300) extending parallel to the at least one base web (200) and mechanically connecting the at least two transverse struts (250) to one another, so that rotational movements of the transverse struts (250) are coupled to one another
- at least two shares (500) for removing the weeds present on the ground, which shares (500) are arranged at a normal distance from the base web (200) on the at least two transverse struts (250) in a fixable alignment with respect to the base web (200), the alignment of the shares (500) remaining unchanged during a rotation of the corresponding transverse struts (250), and
- at least one adjusting device (400) with a drive unit for rotating at least one cross strut, wherein a rotation of the cross struts (250) changes the normal distance of the shares (500) to the base web (200), and wherein the normal distance of the respective shares (500) is continuously adjustable between a largest and a smallest normal distance,
**characterized in that**
the chopping device (10) comprises at least two hoeing units (100), wherein
the adjusting devices (400) of the hoeing units (100) can be controlled independently of one another by means of a control unit, so that the hoeing units (100) can have different processing widths, wherein
the actuating devices (400) of the hoeing units (100) comprise at least one position feedback unit, for example a potentiometer, wherein the processing width of the respective hoeing unit (100) can be detected by means of the position feedback unit, which transmits a corresponding signal to the control unit in order to monitor the respectively set processing width of a hoeing unit (100), to readjust it by means of the control unit and/or to display it visibly for a user, and wherein
the position feedback unit comprises a camera which optically detects the processing width to be set and transmits a corresponding signal to the control unit.

2. Device according to claim 1, **characterized in that** the drive unit of the actuating device (400) is designed as a linearly displaceable actuating arm.

3. Device according to claim 1 or 2, **characterized in that** the at least one actuating device (400) for rotating the transverse struts (250) engages at least two transverse struts (250).

4. Device according to claim 1 or 2, **characterized in that** the adjusting device (400) for rotating the cross struts (250) engages at least one cross strut (250) and the base web (200).

5. Device according to claim 2, **characterized in that** the actuating device (400) further comprises at least one transmission strut (420), which at least one transmission strut (420) is mechanically connected to at least one cross strut (250) and the actuating arm to rotate the cross struts (250) upon linear displacement of the actuating arm.

6. Device according to any one of claims 1 to 5, **characterized in that** the at least one chopping unit (100) comprises at least one support wheel (600), which support wheel (600) is arranged to guide the at least one hoeing unit (100) along the ground in a mounted state of the chopping device (10) on a vehicle, wherein the distance of the at least one hoeing unit (100) to the ground is adjustable by means of a height adjustment device (650).

7. Device according to any one of claims 1 to 6, **characterized in that** at least one plant protection element (700) is arranged at at least one outer end of at least one transverse strut (250), preferably the at least one plant protection element (700) being arranged in its longitudinal direction parallel to the base web (200).

8. Device according to any one of claims 1 to 7, **characterized in that** at least one plant protection element (700) is arranged at the outer ends of at least one transverse strut, preferably the plant protection elements (700) being arranged in their longitudinal direction parallel to the base web (200).

9. Device according to any one of claims 1 to 8, **characterized in that** the support frame (50) has a main section (51) and at least two side sections (52, 53) laterally adjoining the main section (51), which are each hingedly connected to the main section (51) in order to switch between an unfolded and a folded state, at least one hoeing unit (100) being arranged per side section (52, 53).

10. Device according to claim 9, **characterized in that** the side sections (52, 53) lie in an unfolded state in an axis with the main section (51) of the support frame (50) and in a folded state, starting from a state of the chopping device (10) attached to the vehicle, are folded over the main section (51).

11. Device according to any one of claims 1 to 10, **characterized in that** the at least one actuating device (400) is designed as a linear motor or as an electric, hydraulic or pneumatic lifting cylinder.

12. Device according to one of the claims 1 to 11, **characterized in that** a control unit is provided for controlling the actuating device (400), which control unit is arranged in the vehicle to which the chopping device (10) is attached.

## Revendications

1. Bineuse réglable (10) pour éliminer les mauvaises herbes se trouvant sur un sol entre des rangées de plantes utiles qui sont disposées sur le sol à une distance de rangée (20) les unes des autres, la bineuse (10) présentant un châssis porteur (50) qui est aménagé pour être monté sur un véhicule agricole et sur lequel est disposée au moins une unité de bineuse (100) avec une largeur de traitement adaptable à la distance de rangée (20), l'unité de bineuse (100) comprenant ce qui suit :
- au moins une barre de base (200) s'étendant en ligne droite et au moins deux barres transversales (250), lesquelles barres transversales (250) sont montées chacune de manière à pouvoir tourner autour d'un axe de rotation sur là au moins une barre de base (200), les axes de rotation étant disposés parallèlement et dans un plan le long de l'extension longitudinale de la barre de base (200), et au moins deux barres transversales (250) étant disposées parallèlement l'une à l'autre,
- au moins une entretoise de liaison (300) s'étendant parallèlement à l'au moins une entretoise de base (200), qui relie mécaniquement les au moins deux entretoises transversales (250) entre elles, de sorte que les mouvements de rotation des entretoises transversales (250) sont couplés entre eux,
- au moins deux socs (500) pour enlever les mauvaises herbes se trouvant sur le sol, lesquels socs (500) sont disposés à une distance normale de la barre de base (200) sur les au moins deux barres transversales (250) dans une orientation définissable par rapport à la barre de base (200), l'orientation des socs (500) restant inchangée lors d'une rotation des barres transversales (250) correspondantes, et
- au moins un dispositif de réglage (400) avec une unité d'entraînement pour la rotation d'au moins une entretoise transversale, une rotation des entretoises transversales (250) modifiant la distance normale des socs (500) par rapport à la barre de base (200), et la distance normale des socs respectifs (500) pouvant être réglée en continu entre une distance normale maximale et une distance normale minimale,
**caractérisé en ce que**
le dispositif de hachage (10) comprend au moins deux unités de hachage (100), où
les dispositifs de réglage (400) des unités de hachage (100) peuvent être commandés indépendamment les uns des autres au moyen d'un appareil de commande, de sorte que les unités de hachage (100) peuvent présenter des largeurs de traitement différentes, où
les dispositifs de réglage (400) des unités de hachage (100) comprennent au moins une unité de rétroaction de position, par exemple un potentiomètre, la largeur de traitement de l'unité de hachage respective (100) pouvant être détectée au moyen de l'unité de rétroaction de position, qui transmet un signal correspondant à l'appareil de commande, afin de surveiller la largeur de traitement respectivement réglée d'une unité de hachage (100), de la régler par l'appareil de commande et/ou de l'afficher de manière visible pour un utilisateur, et où
l'unité de confirmation de position comprend une caméra qui détecte optiquement la largeur de traitement à régler et transmet un signal correspondant à l'appareil de commande.

2. Dispositif selon la revendication 1, **caractérisé en ce que** l'unité d'entraînement du dispositif de réglage (400) est conçue comme un bras de réglage pouvant être déplacé linéairement.

3. Dispositif selon la revendication 1 ou 2, **caractérisé en ce que** l'au moins un dispositif de réglage (400) pour la rotation des traverses (250) s'engage sur au moins deux traverses (250).

4. Dispositif selon la revendication 1 ou 2, **caractérisé en ce que** le dispositif de réglage (400) pour la rotation des entretoises (250) s'engage sur au moins une entretoise (250) et la barre de base (200).

5. Dispositif selon la revendication 2, **caractérisé en ce que** le dispositif de réglage (400) comprend en outre au moins une entretoise de transmission (420), laquelle au moins une entretoise de transmission (420) est reliée mécaniquement à au moins une entretoise transversale (250) et au bras de réglage afin de faire tourner les entretoises transversales (250) lors d'un déplacement linéaire du bras de réglage.

6. Dispositif selon l'une des revendications 1 à 5, **caractérisé en ce que** ladite au moins une unité de binage (100) comprend au moins une roue d'appui (600), laquelle roue d'appui (600) est agencée pour guider ladite au moins une unité de binage (100) le long du sol lorsque le dispositif de binage (10) est monté sur un véhicule, la distance entre ladite au moins une unité de binage (100) et le sol étant réglable au moyen d'un dispositif de réglage en hauteur (650).

7. Dispositif selon l'une des revendications 1 à 6, **caractérisé en ce qu'**au moins un élément phytosanitaire (700) est disposé à au moins une extrémité extérieure d'au moins une entretoise (250), ledit au moins un élément phytosanitaire (700) étant de préférence disposé dans sa direction longitudinale parallèlement à la barre de base (200).

8. Dispositif selon l'une des revendications 1 à 7, **caractérisé en ce qu'**au moins un élément phytosanitaire (700) est disposé aux extrémités extérieures d'au moins une entretoise, les éléments phytosanitaires (700) étant de préférence disposés dans leur direction longitudinale parallèlement à l'entretoise de base (200).

9. Dispositif selon l'une quelconque des revendications 1 à 8, **caractérisé en ce que** le châssis porteur (50) comprend une portion principale (51) et au moins deux portions latérales (52, 53) se raccordant latéralement à la portion principale (51), chacune étant articulée à la portion principale (51) pour passer d'un état déplié à un état replié, au moins une unité de hachage (100) étant disposée par portion latérale (52, 53).

10. Dispositif selon la revendication 9, **caractérisé en ce que** les portions latérales (52, 53) sont dans l'axe de la portion principale (51) du châssis porteur (50) dans un état déployé et sont repliées sur la portion principale (51) dans un état replié, à partir d'un état de la bineuse (10) montée sur le véhicule.

11. Dispositif selon l'une des revendications 1 à 10, **caractérisé en ce que** l'au moins un dispositif de réglage (400) est conçu comme un moteur linéaire ou comme un vérin de levage électrique, hydraulique ou pneumatique.

12. Dispositif selon l'une des revendications 1 à 11, **caractérisé en ce qu'**un appareil de commande est prévu pour commander le dispositif de réglage (400), lequel appareil de commande est disposé dans le véhicule sur lequel est monté le dispositif de hachage (10).
